# EUROPÄISCHE PATENTSCHRIFT

(11) **EP 0 697 373 B1**
(45) Veröffentlichungstag und Bekanntmachung des Hinweises auf die Patenterteilung: **27.09.2000**
(21) Anmeldenummer: 95111301.8
(22) Anmeldetag: 19.07.1995
(51) Int. Cl.: C01B 21/082, C09C 1/00, C03C 1/04, C08K 3/28, C09D 7/12, A61K 7/48

(54) **Farbpigmente auf der Basis von Oxidnitriden, deren Herstellung und Verwendung**
Oxynitride-based coloured pigments and process for their preparation
Pigments colorés à base d'oxynitrure et leur procédé de fabrication

(30) Priorität: 19.08.1994 DE 4429532
(43) Veröffentlichungstag der Anmeldung: 21.02.1996
(73) Patentinhaber: dmc2 Degussa Metals Catalysts Cerdec AG, 60287 Frankfurt am Main (DE)
(72) Erfinder: Jansen, Martin, Prof., D-53127 Bonn (DE); Letschert, Hans-Peter, D-53121 Bonn (DE)

(56) Entgegenhaltungen:
- EP-A- 0 184 951
- EP-A- 0 238 338
- EP-A- 0 286 503
- DE-A- 3 443 622
- ANNALES DE CHIMIE, Bd. 16, Nr. 7, 1991 Seiten 553-560, R. ARMAND ET AL. 'Nouvelles perovskites oxynitrures de stoechiometrie ABO2N.'
- JOURNAL OF MATERIALS SCIENCE, Bd. 29, Nr. 18, 15.September 1994 LONDON (GB), Seiten 4686-4693, XP 000483842 A.HELLWIG ET AL. 'Formation of barium-tantalum oxynitrides.'

## Beschreibung

Die Erfindung richtet sich auf ein Verfahren zur Herstellung von Farbpigmenten auf der Basis von Oxidnitriden, auf die verfahrensgemäß erhältlichen Farbpigmente, insbesondere Farbpigmente aus dem gelben bis roten Farbenspektrum mit erhöhter Farbbrillanz sowie deren Verwendung.

Farbpigmente unterliegen je nach Anwendungsart und Gebrauch der damit eingefärbten Artikel unterschiedlichen Beeinträchtigungen. Aus Artikeln, welche mit Pigmenten auf der Basis oxidischer, sulfidischer oder selenidischer Schwermetallverbindungen eingefärbt oder unter Verwendung derselben dekoriert sind, können beim Kontakt mit sauren oder alkalischen Lösungen toxikologisch bedenkliche Bestandteile freigesetzt werden, beispielsweise Nickel, Kobalt oder Chrom aus Spinellen und Cadmium aus Cadmiumsulfid-Gelb sowie Cadmium und Selen aus Cadmiumsulfoselenid-Rot beziehungsweise -Orange. Ein weiteres Problem ist die Freisetzung toxikologischer Schwermetalle bei der Deponierung und der Verbrennung derart eingefärbter Artikel in Müllverbrennungsanlagen. Es besteht ein besonderes Interesse, Pigmente im gelben bis roten Spektralbereich zu finden, die toxikologisch weniger bedenkliche Bestandteile enthalten als die vorgenannten Cadmiumpigmente. Aus ökonomischer Sicht ist von Interesse, bei der Herstellung einer ganzen Pigmentpalette, welche einen größeren Teil des Farbenspektrums abdeckt, die Farbe durch mengenmäßige Variation einzelner Rohstoffe sicher einstellen zu können, wie dies im Falle der Cd(S,Se)-möglich ist.

Aus der FR-A 2 573 060 sind Nitride und Oxidnitride bekannt, welche in der Perowskitstruktur kristallisieren und die allgemeine Formel (a) aufweisen:
(a) A B O₃₋ₙ Nₙ; offenbart wird auch die Formel (b):
(b) A₁₋ₓ A'ₓ B_{1-y} B'_{y} O₃₋ₙ Nₙ. In den Formeln bedeuten:

A und A' ein- bis vierwertige Kationen, darunter beispielsweise Ca²⁺, Sr²⁺ und Ba²⁺ sowie Ln³⁺ (Ln = Lanthanidenelement) und Bi³⁺, und
B und B' drei- bis sechswertige Kationen, darunter Nb⁵⁺ und Ta⁵⁺ sowie Ti⁴⁺ und Zr⁴⁺; ferner gilt O < n < 3 und O < x,y < 1. In diesem Dokument werden jedoch nur Verbindungen der allgemeinen Formel A B O₃₋ₙ Nₙ, wobei als A auch zwei gleichwertige Ionen gleichzeitig anwesend sein können, konkret offenbart. Als Verwendungszweck werden dielektrische Materialien genannt, nicht jedoch Farbpigmente. Offenbart wird ausschließlich die Farbe von BaTaO₂N (kastanienbraun) und SrTaO₂N (orange).

Gemäß dem in der FR-A 2 573 060 beschriebenen Verfahren lassen sich die genannten Oxidnitride durch Glühen eines Pulvergemischs aus einem Oxid, Oxidnitrid oder Nitrid mit dem Kation A und einem Oxid, Oxidnitrid oder Nitrid mit dem Kation B in einer Stickstoff- oder Ammoniakatmosphäre herstellen. Ausgehend von Oxiden der Elemente A und B und Ammoniak als nitridierendes Agenz werden als Glühtemperatur 1000 °C und als Glühdauer etwa 48 Stunden genannt.

Bei der Nacharbeitung des vorstehend gewürdigten Verfahrens wurde festgestellt, daß die hiermit hergestellten Oxidnitride wenig brillante Farbtöne aufweisen und somit coloristisch nicht attraktiv sind. Nachteilig an dem vorbekannten Verfahren sind ferner die sehr langen Reaktionszeiten bei gleichzeitig sehr hoher Temperatur. Eine Maßnahme, wonach durch Variation der Indizes x und/oder y in der Formel (b) die Farbe des Oxidnitrids bestimmt werden kann, wird in der FR-A 2 573 060 weder offenbart noch nahegelegt.

In der noch nicht veröffentlichten DE-Patentanmeldung P 43 17 421.3 wird ein verbessertes Verfahren zur Herstellung von Oxidnitriden der allgemeinen Formel LnTaON₂ für ein Seltenerdmetall steht, beschrieben. Bei diesem Verfahren werden Produkte mit erhöhter Farbbrillanz erhalten, welche sich als Farbkörper zur Anfärbung von Kunststoffen eignen. Die genannten Farbkörper decken jedoch nur den Bereich der orange-gelben bis braun-roten Farben ab. Zudem handelt es sich bei einigen Seltenerdmetalle um recht teure Ausgangsstoffe.

Bekannt sind auch Oxidnitride der Formel Ln₂Ta₂O₅N₂ in der Pyrochlorstruktur kristallisieren - siehe J. Solid State Chem. 107 (1), 39 - 42 (1993).

Die EP 0 286 503 A1 lehrt Oxidnitride mit Perowskitstruktur der allgemeinen Formel AB (O,N)₃, worin A ein Metall aus der Reihe I A, II A, Yttrium oder Lanthaniden und B ein Übergangsmetall der Gruppen IV A bis I B ist, wobei mindestens eines der Metalle A und B unterhalb der maximalen Oxidationsstufe vorliegen. Die Oxidnitride werden als Elektrodenmaterial, insbesondere für mehrschichtige keramische Kondensatoren, verwendet.

Die DE-OS 34 43 622 betrifft schwarze Pigmente auf der Basis von Titanoxidnitrid. Mit zunehmendem N/O-Verhältnis ändert sich der Farbton der schwarzen Pigmente von blau über purpur nach braun.

Aufgabe der vorliegenden Erfindung ist es, die bisher verfügbare Palette an Farbpigmenten auf der Basis von Oxidnitriden zu erweitern und gleichzeitig ein einfaches Verfahren aufzuzeigen, das die Einstellung der Farbe bei der Herstellung der Oxidnitride durch Variation der Menge der oxidnitridbildenden Einsatzstoffe gestattet. Eine weitere Aufgabe betrifft die Bereitstellung von Oxidnitriden in der Perowskitstruktur, welche sich gegenüber den aus der FR-A 2 573 060 bekannten Oxidnitriden durch eine höhere Farbbrillanz auszeichnen und sich daher als Farbpigmente eignen. Die aufzuzeigenden Oxidnitride sollten das gesamte Farbenspektrum von Gelb bis Rot abdecken. Schließlich sollten die Produkte nur toxikologisch unbedenkliche Bestandteile enthalten. Eine weitere Aufgabe richtet sich darauf, das vorbekannte Herstellungsverfahren so zu gestalten, daß die gewünschten farbbrillanten Oxidnitride erhältlich sind, und zwar vorzugsweise in kürzerer Reaktionszeit als nach dem bisher bekannten Verfahren. Schließlich richtet sich eine weitere

Aufgabe auf die Verwendung der erfindungsgemäßen Oxidnitride mit höherer Farbbrillanz als Farbpigmente.

Gefunden wurde ein Verfahren zur Herstellung von Oxidnitriden mit einer Farbe im Bereich von im wesentlichen gelb bis rot, wobei das Atomverhältnis Stickstoff zu Sauerstoff für die Farbe bestimmend ist, mit Pyrochlorstruktur und den allgemeinen Formeln

Aₓ A'₂₋ₓ B₂O₅₊ₓ N₂₋ₓ (Ia)

oder

A'₂ B_{2-y} B'_{y} O_{5+y} N_{2-y} (Ib),

worin A, A', B und B' für ein oder mehrere Kationen aus der Reihe
A: Mg²⁺, Ca²⁺, Sr²⁺, Ba²⁺ Zn²⁺;
A': Ln³⁺ (=Seltenerdelement), Bi³⁺, Al³⁺, Fe³⁺;
B: V⁵⁺, Nb⁵⁺, Ta⁵⁺, Mo⁵⁺, W⁵⁺;
B': Ti⁴⁺, Zr⁴⁺, Hf⁴⁺, Sn⁴⁺, Ge⁴⁺, Si⁴⁺, Nb⁴⁺, Ta⁴⁺ und
x und y für eine Zahl zwischen 0 und kleiner 2 stehen, ausgenommen Ln₂Ta₂O₅N₂,
oder mit Spinellstruktur und den allgemeinen Formeln

C D₂₋ₘ D'ₘ O₄₋ₘ Nₘ (IIa)

oder

C₁₋ₙ C'ₙ D₂ O₄₋ₙ Nₙ (IIb),

worin C, C', D und D' für ein oder mehrere Kationen aus der Reihe
C: Mg²⁺, Ca²⁺, Mn²⁺, Fe²⁺, Co²⁺, Ni²⁺, Zn²⁺;
D: Al³⁺, Ga³⁺, In³⁺, Ti³⁺, V³⁺, Cr³⁺, Fe³⁺, Co³⁺, Ni³⁺;
D': Ti⁴⁺, Zr⁴⁺, Hf⁴⁺, Sn⁴⁺, Ge⁴⁺, Si⁴⁺, Nb⁴⁺, Ta⁴⁺;
C': Al³⁺, Ga³⁺, In³⁺, Ti³⁺, V³⁺, Cr³⁺, Fe³⁺, Co³⁺, Ni³⁺ und
m eine Zahl zwischen größer 0 und 2 und
n eine Zahl zwischen größer 0 und 1 stehen,
oder mit Elpasolitstruktur und der allgemeinen Formel

A'₂ Q B O_{5-z} N_{1+z} ,

worin z für 0, 1 oder 2 steht und bei z gleich 0 Q ein zweiwertiges Metallion C, bei z gleich 1 Q ein dreiwertiges Metallion A" und bei z = 2 Q ein vierwertiges Metallion D'' ist, entsprechend den Formeln

A'₂ C B O₅ N (IIIa),

A'₂ A"B O₄ N₂ (IIIb),

A'₂ D" B O₃ N₃ (IIIc),

worin A', B und C die vorerwähnte Bedeutung haben, A" für Ln³⁺ oder Bi³⁺ und D" für ein vierwertiges Metallion steht, oder mit Perowskitstruktur und den allgemeinen Formeln

A₁₋ᵤA'ᵤ B O₂₋ᵤ N₁₊ᵤ (IV)

oder

A'B_{1-w} B'_{w} O_{1+w} N_{2-w} (V),

worin A, A', B und B' für ein oder mehrere Kationen aus der Reihe
A: Mg²⁺, Ca²⁺, Sr²⁺, Ba²⁺;
A': Ln³⁺ (=Seltenerdmetall), Bi³⁺, Al³⁺, Fe³⁺
B: V⁵⁺, Nb⁵⁺, Ta⁵⁺;
B': Ti⁴⁺, Zr⁴⁺, Hf⁴⁺, Sn⁴⁺, Ge⁴⁺ und
u und w für eine Zahl zwischen 0 und 1 stehen, ausgenommen Oxidnitride der allgemeinen Formel LnTaON₂, wobei diese Perowskit-Farbpigmente eine erhöhte Farbbrillanz (ermittelt aus L*a*b*-Farbwerten des CIE-Lab-Systems, DIN 5033, Teil 3) aufweisen, umfassend Glühen eines pulverförmigen Gemischs, enthaltend oxidnitridbildende Metallverbindungen mit den Kationen des Oxidnitrids im strukturformelgemäßen und damit die Kristallstruktur bestimmenden Atomverhältnis, unter nitridierenden Bedingungen, das dadurch gekennzeichnet ist, daß das zu glühende Gemisch mindestens einen Mineralisator enthält und die Farbe des Oxidnitrids innerhalb einer Kristallstruktur über das Atomverhältnis N zu O eingestellt wird, wobei durch schrittweise Substitution eines ersten Kations im Gemisch der oxidnitridbildenden Metallverbindungen durch ein um eine Einheit höherwertiges zweites Kation das N/O-Verhältnis erhöht und damit die Absorptionskante langwellig verschoben oder durch schrittweise Substitution eines ersten Kations im Gemisch der oxidnitridbildenden Metallverbindungen durch ein um eine Einheit niederwertiges zweites Kation das N/O-Verhältnis erniedrigt und damit die Absorptionskante kurzwellig verschoben wird.

Die weiteren Verfahrensansprüche richten sich auf bevorzugte Ausführungsformen des Verfahrens.

Erfindungsgemäß ist es möglich, die Farbe innerhalb des Farbenspektrums von im allgemeinen gelb bis rot allein durch die Variation der Menge der im Oxid enthaltenen Kationen zu bestimmen. Ausgehend von der Strukturformel für ein Oxidnitrid, das in einer bestimmten Kristallstruktur vorliegt, läßt sich durch schrittweise Substitution eines Kations durch ein um eine Einheit höherwertiges Kation das Verhältnis Stickstoff zu Sauerstoff erhöhen und damit die Farbe langwellig verschieben; umgekehrt wird durch schrittweise Substitution eines Kations durch ein um eine Einheit niedrigwertiges Kation das Atomverhältnis von Stickstoff zu Sauerstoff erniedrigt und damit die Farbe kurzwellig verschoben. Durch die beschriebene Maßnahme kann somit in einfacher Weise eine Pigmentpalette aufgebaut werden, welche einen großen Teil des Farbenspektrums abdeckt. Bei den Kationen handelt es sich um solche mit der Wertigkeit 1 bis 6, vorzugsweise 2 bis 5. Bei den gattungsgemäßen Oxidnitriden handelt es sich vorzugsweise um solche, welche drei verschiedene Kationen enthalten; lediglich bei den Randgliedern einer Reihe kann es sich um Oxidnitride handeln, welche nur zwei unterschiedliche Kationen enthalten.

Die gattungsgemäßen Oxidnitride kristallisieren üblicherweise in der Perowskitstruktur, der Pyrochlorstruktur, der Spinellstruktur und der Elpasolitstruktur. Jeder Kristallstruktur ist auch eine bestimmte Strukturformel zuzuordnen. Ausgehend von einem in der Perowskitstruktur kristallisierenden Oxidnitrid der Formel ABO₂N kann durch schrittweisen Austausch von A durch ein höherwertiges Kation A' ein Oxidnitrid der Formel A₁₋ₓ A'ₓ B O₂₋ₓ N₁₊ₓ erhalten werden, dessen Farbe als Folge des erhöhten N/O-Atomverhältnisses langwellig verschoben ist. Analog kann ausgehend von dem in der Perowskitstruktur kristallisierenden Oxidnitrid der allgemeinen Formel ABON₂ durch schrittweise Substitution des Kations B durch ein um eine Einheit niedrigerwertiges Kation B' in ein Oxidnitrid der allgemeinen Formel A B₁₋ₓ B'ₓ O₁₊ₓ N₂₋ₓ überführt werden, dessen Absorptionskante kurzwellig verschoben ist. Die Lage der Absorptionskante der Grenzglieder (x gleich 0 und x gleich 1) wird von den anwesenden Kationen bestimmt.

Nach dem erfindungsgemäßen Verfahren sind neue Farbpigmente auf der Basis von Oxidnitriden, deren Atomverhältnis Stickstoff zu Sauerstoff für die Farbe bestimmend ist, erhältlich: Es handelt sich um in der Pyrochlorstruktur kristallisierte Oxidnitride der allgemeinen Formeln

Aₓ A'₂₋ₓ B₂O₅₊ₓ N₂₋ₓ (Ia)

oder

A'₂ B_{2-y} B'_{y} O_{5+y} N_{2-y} (Ib),

worin A, A', B und B' für ein oder mehrere Kationen aus der Reihe
A: Mg²⁺, Ca²⁺, Sr²⁺, Ba²⁺ Zn²⁺;
A': Ln³⁺ (=Seltenerdelement), Bi³⁺, Al³⁺, Fe³⁺;
B: V⁵⁺, Nb⁵⁺, Ta⁵⁺, Mo⁵⁺, W⁵⁺;
B': Ti⁴⁺, Zr⁴⁺, Hf⁴⁺, Sn⁴⁺, Ge⁴⁺, Si⁴⁺, Nb⁴⁺, Ta⁴⁺ und
x und y für eine Zahl zwischen 0 und kleiner 2 stehen, ausgenommen Ln₂Ta₂O₅N₂,
um in der Spinellstruktur kristallisierte Oxidnitride der allgemeinen Formeln

C D₂₋ₘ D'ₘ O₄₋ₘ Nₘ (IIa)

oder

C₁₋ₙ C'ₙ D₂ O₄₋ₙ Nₙ (IIb),

worin C, C', D und D' für ein oder mehrere Kationen aus der Reihe
C: Mg²⁺, Ca²⁺, Mn²⁺, Fe²⁺, Co²⁺, Ni²⁺, Zn²⁺;
D: Al³⁺, Ga³⁺, In³⁺, Ti³⁺, V³⁺, Cr³⁺, Fe³⁺, Co³⁺, Ni³⁺;
D': Ti⁴⁺, Zr⁴⁺, Hf⁴⁺, Sn⁴⁺, Ge⁴⁺, Si⁴⁺, Nb⁴⁺, Ta⁴⁺;
C': Al³⁺, Ga³⁺, In³⁺, Ti³⁺, V³⁺, Cr³⁺, Fe³⁺, Co³⁺, Ni³⁺ und
m eine Zahl zwischen größer 0 und 2 und
n eine Zahl zwischen größer 0 und 1 stehen,
und um in der Elpasolitstruktur kristallisierte Oxidnitride der allgemeinen Formel

A'₂ Q B' O_{5-z} N_{1+z} ,

worin z für 0, 1 oder 2 steht und bei z gleich 0 Q ein zweiwertiges Metallion C, bei z gleich 1 Q ein dreiwertiges Metallion A" und bei z = 2 Q ein vierwertiges Metallion D ist, entsprechend den Formeln

A'₂ C B O₅ N (IIIa),

A'₂ A"B O₄ N₂ (IIIb),

A'₂ D" B O₃ N₃ (IIIc),

worin A', B, C und D'' die vorerwähnte Bedeutung haben und A'' für Ln³⁺ oder Bi³⁺ steht.

Bei den vorgenannten Oxidnitriden in der Pyrochlor-, Spinell- und Elpasolitstruktur handelt es sich mit Ausnahme der Verbindungsklasse Ln₂Ta₂O₅N₂ um neue Oxidnitride.

Schließlich sind nach dem vorgenannten Verfahren auch formelmäßig vorbekannte Oxidnitride in der Perowskitstruktur erhältlich. Gemäß einer nachstehend näher beschriebenen bevorzugten Ausführungsform des Verfahrens - Glühen in Gegenwart von Mineralisatoren - sind jedoch Oxidnitride erhältlich, welche eine höhere Farbbrillanz (ermittelbar aus L*a*b*-Farbwerten nach Cielab, DIN 5033, Teil 3) aufweisen als die nach dem vorbekannten Verfahren zugänglichen Produkte. Hierbei handelt es sich um Farbpigmente auf der Basis von in der Perowskitstruktur vorliegenden Oxidnitriden, deren Atomverhältnis Stickstoff zu Sauerstoff für die Farbe bestimmend ist, mit den allgemeinen Formeln

A₁₋ᵤA'ᵤ B O₂₋ᵤN₁₊ᵤ (IV)

oder

A'B_{1-w}B'_{w}O_{1+w}N_{2-w} (V),

worin A, A', B und B' für ein oder mehrere Kationen aus der Reihe
A: MG²⁺, Ca²⁺, Sr²⁺, Ba²⁺;
A': Ln³⁺ (Seltenerdmetall), Bi³⁺, Al³⁺, Fe³⁺
B: V⁵⁺, Nb⁵⁺, Ta⁵⁺,
B': Ti⁴⁺, Zr⁴⁺, Hf⁴⁺, Sn⁴⁺, Ge⁴⁺ und
u und w für eine Zahl zwischen 0 und 1 stehen, jedoch für A' gleich Ln u ungliech 1 und w ungleich 0 ist.

Die erfindungsgemäß erhältlichen Oxidnitride vom Perowskittyp mit erhöhter Farbbrillanz decken unter Zugrundelegung jeweils eines Verbindungstyps gemäß Formel (IV) oder (V) und ausgewählter Kationen für A, A' und B oder A', B und B' das gesamte Farbenspektrum zwischen etwa gelb-grün und rot ab; vereinzelt können auch Farben jenseits dieser Grenzen erhalten werden. Die erfindungsgemäß erhältlichen Oxidnitride zeichnen sich durch eine scharfe Absorptionskante aus. Die Absorptionskante ist gegenüber Produkten, welche nach dem vorbekannten Verfahren unter Einsatz der gleichen Metallverbindungen erhalten wurden, meistens etwas langwellig verschoben. Durch Auswahl des Zahlenwerts für u in der Formel (IV) und w in der Formel (V) wird gleichzeitig das Atomverhältnis von Sauerstoff zu Stickstoff festgelegt. Produkte der Formel (IV) mit u gegen 1 und Produkte der Formel (V) mit w gegen 0 liegen im allgemeinen im roten Bereich, Produkte mit u gegen 0 und w gegen 1 im allgemeinen im gelben Bereich. Zwecks Verschiebung der Farbe von einem mehr gelben nach einem eher roten Farbton werden u und w bei der Herstellung des Oxidnitrids derart ausgewählt, daß das Atomverhältnis von Stickstoff zu Sauerstoff zunimmt; zwecks Verschiebung der Farbe von einem roten Farbton nach einem gelben Farbton werden u und w derart ausgewählt, daß das Atomverhältnis von Stickstoff zu Sauerstoff abnimmt. Somit ist es möglich, durch Glühen eines Pulvergemischs, enthaltend die Kationen A, A' und B beziehungsweise A', B und B' im formelgemäßen stöchiometrischen Verhältnis gelbe bis rote Farbpigmente zu erhalten und somit unter Einsatz von drei Metallverbindungen mit jeweils unterschiedlichem Kation durch Variation von u beziehungsweise w eine Pigmentpalette zwischen gelb-grün und rot aufzubauen. Analog Maßnahmen werden zur Herstellung von Oxidnitriden der allgemeinen Formeln (I), (II) und (III) zur Einstellung der Farbe ergriffen.

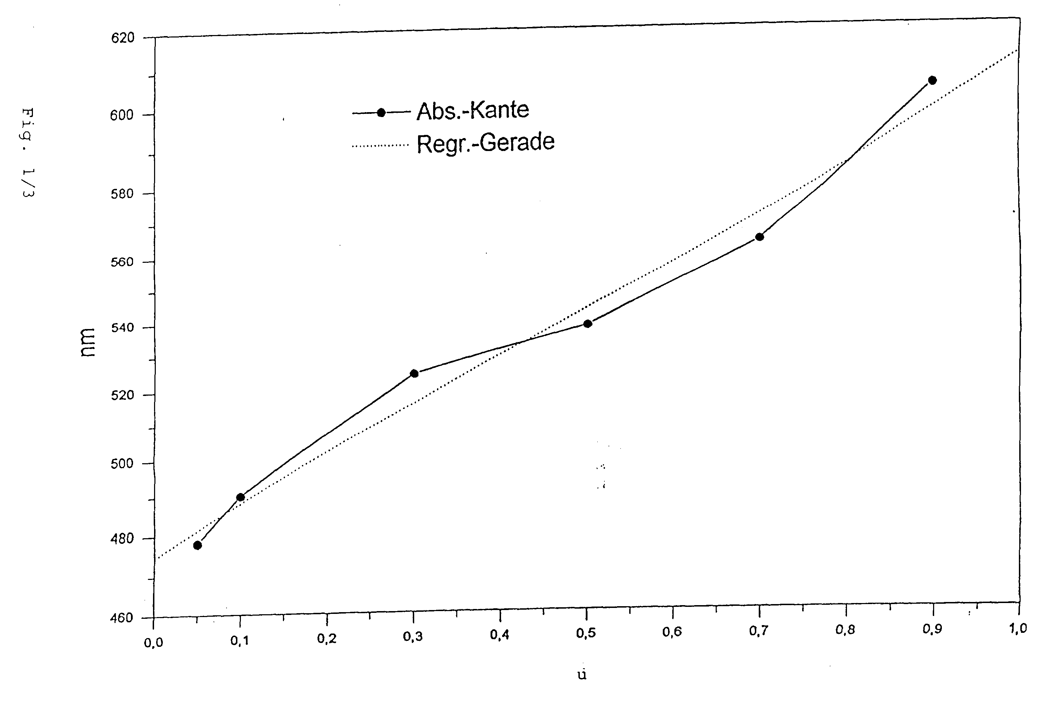

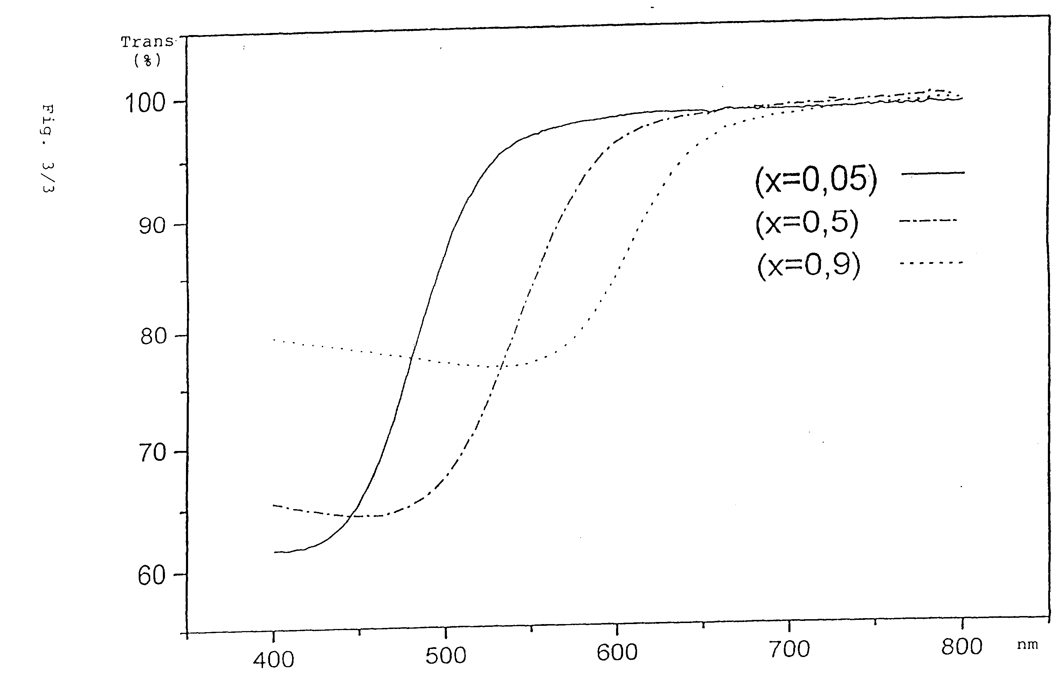

Besonders bevorzugt lassen sich in der Perowskitstruktur kristallisierende Oxidnitride der Formel (IV) gemäß dem bevorzugten Verfahren herstellen und als Farbpigmente verwenden, in welchen A für Ca²⁺, Sr²⁺, oder Ba²⁺, A' für Ln³⁺, B für Ta⁵⁺ und u für eine Zahl zwischen 0 und kleiner 1 stehen. Ln bedeutet ein Seltenerdelement mit der Ordnungszahl 21, 39, 57-60 sowie 62-71, wobei Lanthan bevorzugt wird. In welchem Maße sich die Farbe durch Variation des Atomverhältnisses von Stickstoff zu Sauerstoff verändert, folgt aus Beispiel 3 und Figur 1, worin im System Ca₁₋ᵤLaᵤTaO₂₋ᵤN₁₊ᵤ die Abhängigkeit der Absorptionskante von x dargestellt ist; die Figur 1 enthält ferner die Regressionsgerade. Figur 3 zeigt die Transmissionsspektren von drei Oxidnitriden des genannten Systems.

Bei den umzusetzenden oxidnitridbildenden Metallverbindungen, welche jeweils ein oder mehrere gleiche oder verschiedene, vorzugsweise aber gleiche Kationen aus der jeweiligen Gruppe A, A', B, B', C, C', D, D' und A'' enthalten, handelt es sich um solche der bereits genannten Stoffklassen, vorzugsweise um Oxide, Mischoxide, Hydroxide, Oxidhydrate, Carbonate, Nitrate, Chloride, Oxidchloride, Oxidnitride und Oxalate. Unter den umzusetzenden Metallverbindungen werden aber auch solche verstanden, welche gleichzeitig zwei oder mehrere Kationen unterschiedlicher Wertigkeit, also Kationen aus zwei Gruppen aus der Reihe A, A', B, B', C, C', D, D' und A'' enthalten, beispielsweise Mischoxide.

Gemäß einer bevorzugten Ausführungsform enthält das zu glühende Gemisch mindestens eine der umzusetzenden Metallverbindungen in Form eines Halogenids, Oxidhalogenids oder Nitridhalogenids und mindestens eine der umzusetzenden Metallverbindungen in Form einer ein oder mehrere Sauerstoffatome enthaltenden Metallverbindung, wie etwa eines Oxids, Hydroxids, Oxidnitrats, Carbonats oder Nitrats.

Bevorzugte Oxidnitride, in welchen B für 5-wertiges Tantal steht, lassen sich unter Verwendung von Ta₂O₅, besonders günstig aber unter Verwendung von Tantal(V)oxidhydrat der Formel Ta₂O₅ · aq., wobei aq. Hydratwasser bedeutet und die Menge aq. 14 bis 17 Gew.-% beträgt, herstellen (siehe DE-A 42 34 938).

Gemäß dem Verfahren, welche zu besonders brillanten Farbpigmenten führt, ist erfindungswesentlicher Bestandteil des zu glühenden Gemischs ein Mineralisator, wobei es sich hierbei um einen einzelnen Stoff oder um ein Stoffgemisch handeln kann. Unter den als Mineralisator wirksamen Alkali- und Erdalkalihalogeniden werden solche bevorzugt, deren Schmelzpunkt unterhalb der Glühtemperatur liegt. Alkali- und Erdalkalihalogenide, insbesondere Fluoride und/oder Chloride von Lithium, Natrium, Kalium, Magnesium, Calcium, Barium und Strontium sind besonders geeignet. Halogenide können in dem zu glühenden Gemisch gleichzeitig sowohl als Mineralisator wirken als auch als Metallverbindung, deren Kation während der beim Glühprozess stattfindenden Festkörperreaktion in das Oxidnitrid eingebaut wird.

Bei einer weiteren Klasse von Mineralisatoren handelt es sich um Ammoniumsalze der Kohlensäure oder einer Mono- oder Dicarbonsäure mit 1 bis 4 C-Atomen; bevorzugt sind hierbei Ammoniumcarbonat, Ammoniumbicarbonat, Ammoniumacetat und Ammoniumoxalat. Schließlich sind auch Schwefel und Schwefelverbindungen sowie Fluoride aus der Reihe Na₃AlF₆, Na₂SiF₆ und AlF₃ als Mineralisatoren einsetzbar.

Die eingesetzte Mineralisatormenge kann in einem weiten Bereich liegen, nämlich zwischen 0,1 und 10 Gewichtsteilen pro Gewichtsteil des Gemischs der umzusetzenden und hierbei das Oxidnitrid bildenden Metallverbindungen. Bevorzugt werden ein oder mehrere Mineralisatoren in einer Menge zwischen 0,5 und 5 Gewichtsteilen pro Gewichtsteil des zu glühenden Gemischs der umzusetzenden Metallverbindungen eingesetzt.

Das zu glühende pulverförmige Gemisch, enthaltend die umzusetzenden Metallverbindungen und einen oder mehrere Mineralisatoren, wird zweckmäßigerweise vor dem eigentlichen Glühvorgang intensiv gemischt und homogenisiert. Eine besonders gute Homogenisierung läßt sich durch Behandeln des Pulvergemischs in einer Intensivmühle, insbesondere einer Kugelmühle, bewerkstelligen. Alternativ können auch ein oder mehrere Mineralisatoren oder/und ein Teil der umzusetzenden Metallverbindungen in Form einer wäßrigen Lösung oder Suspension mit dem restlichen Teil der oxidnitridbildenden Metallverbindungen und/oder Mineralisatoren in Pulverform miteinander in Kontakt gebracht werden; nach dem Verdampfen des Lösungs-/Suspensionsmittels wird das erhaltene Gemisch, gegebenenfalls nach einem weiteren Mahlvorgang, geglüht.

Der eigentliche Glühprozeß erfolgt in einem Ofen in Gegenwart einer eine Quelle für Stickstoff, vorzugsweise Ammoniak, enthaltenden reduzierenden Atmosphäre. Außer der Quelle für Stickstoff, wie Ammoniak und/oder Stickstoff, kann die Ofenatmosphäre auch eine Quelle für Kohlenstoff, wie Methan, Ethan, Propan und Butan, sowie Wasserstoff oder/und ein oder mehrere Edelgase enthalten. Vorzugsweise besteht die Atmosphäre aus im wesentlichen 10 bis 100 Volumteilen Ammoniak und 0 bis 90 Volumteilen Stickstoff. Besonders bevorzugt wird eine Atmosphäre, welche überwiegend aus Ammoniak besteht, jedoch auch bis zu 10 Mol-%, bezogen auf Ammoniak, Stickstoff und/oder Methan enthalten kann. Die dem Ofen zugeführte nitridierende Atmosphäre soll möglichst frei von Wasser sein. Um die Ofenatmosphäre, etwa eine solche aus im wesentlichen Ammoniak, wenigstens teilweise rezyklieren zu können, ist es zweckmäßig, diese über einen Trockner zu leiten und anschließend zu rezyklieren.

Der Glühprozeß wird solange betrieben, bis aus den eingesetzten Rohstoffen ein phasenreines Oxidnitrid gebildet worden ist. Die Glühtemperatur liegt bei 700 bis 1250 °C, im allgemeinen unter 1100 °C, meist zwischen 700 und 1000 °C und besonders bevorzugt zwischen 800 und 900 °C. Bei einer Glühtemperatur im Bereich von 800 bis 900 °C und einer im wesentlichen aus Ammoniak bestehenden Ofenatmosphäre beträgt die Glühdauer etwa 10 bis 40 Stunden.

Zum Teil werden anwesende Mineralisatoren bereits während des Glühprozesses durch Zersetzung oder Sublimation aus dem Glühgemisch ausgetragen. Sofern dies erwünscht oder erforderlich ist, kann sich an den Glühprozeß noch eine Naßbehandlung zwecks Herauslösen anwesender Mineralisatorbestandteile anschließen. Die Nachbehandlung kann mit einem üblichen Mahlprozeß, etwa in einer Kugelmühle, kombiniert werden. Zur Naßbehandlung dienen wäßrige Lösungen, deren pH-Wert vorzugsweise neutral bis sauer ist.

Durch die erfindungsgemäße Maßnahme der Mitverwendung eines oder mehrerer Mineralisatoren ist es überraschenderweise möglich geworden, zu farbbrillanteren Oxidnitriden zu gelangen als dies nach dem vorbekannten Verfahren möglich war. Gegenüber den in Anwesenheit von Mineralisatoren erhältlichen Oxidnitriden mit erhöhter Farbbrillanz wirken die in Abwesenheit von Mineralisatoren mit gleichen Einsatzstoffen und gleichen Molverhältnissen hergestellten Oxidnitride stets wesentlich matter und meist brauner. Es wird vermutet, daß die höhere Farbbrillanz der erfindungsgemäßen Oxidnitride das Ergebnis der durch das erfindungsgemäße Verfahren ermöglichten vollständigeren Umsetzung und damit höheren Phasenreinheit und einer verfahrensbedingt erhältlichen höheren Kornfeinheit sowie eines engeren Kornspektrums ist.

Es war nicht vorhersehbar, daß durch die Verwendung von Mineralisatoren der Glühprozeß beschleunigt wird und gleichzeitig Oxidnitride in höherer Reinheit und damit höherer Farbintensität und Brillanz erhalten werden als bei dem vorbekannten Verfahren. Die Auswahl der umzusetzenden Metallverbindungen konnte überraschenderweise ausgedehnt und in einer speziellen Ausführungsform des Verfahrens dieses durch Reduzierung der Anzahl der im zu glühenden Gemisch enthaltenen Rohstoffe vereinfacht werden, indem Metallhalogenide, Metalloxidhalogenide oder Metallnitridhalogenide gleichzeitig als umzusetzende Metallverbindung und als Mineralisator eingesetzt werden können. Durch die erfindungsgemäße Veränderbarkeit des Atomverhältnisses von Stickstoff zu Sauerstoff in den Oxidnitriden gleicher Struktur und gleicher Kationen ist es möglich, mit einfachen Mitteln eine komplette Farbpalette innerhalb eines breiten Bereichs des Farbenspektrums aufzubauen. Durch Auswahl der Kristallstruktur und der Kationen lassen sich die Breite der Farbpaletten, die Farbtiefe und der Farbcharakter steuern.

Aufgrund der durch das erfindungsgemäße Verfahren erhältlichen hohen Farbbrillanz der hergestellten Oxidnitride der allgemeinen Formel (I) bis (V) erschließt sich diesen Produkten ein neues Anwendungsgebiet, nämlich die Verwendung als Farbpigment. Die Verwendung von nach dem vorbekannten Verfahren hergestellten Oxidnitriden in der Perowskitstruktur als Farbpigment standen bisher die in coloristischer Hinsicht wenig attraktiven Farben sowie die ungenügende Farbbrillanz entgegen. Durch das bevorzugte erfindungsgemäße Verfahren wurde es möglich, diesem Mangel abzuhelfen, so daß nun neue temperaturstabile Pigmente aus dem gesamten gelben bis roten Farbenspektrum zur Verfügung stehen, welche keine in toxikologischer Hinsicht bedenklichen Metalle enthalten.

Die erfindungsgemäß erhältlichen Farbpigmente eignen sich zur Einfärbung von Kunststoffen, Lacken, Druckfarben und Tinten sowie kosmetischen Artikeln. Die hohe thermische Stabilität der Oxidnitride erlaubt die Einfärbung der Kunststoffe in der Masse mit anschließender Extrusion sowie die Verwendung in Einbrennlacken. Überraschenderweise wurde auch gefunden, daß sich die Oxidnitride zur Herstellung von einbrennfähigen Glasfarben und Einfärben von unterhalb 700 °C, vorzugsweise unterhalb 650 °C, einbrennfähigen Glasuren eignen. Da die Fachwelt gerade bei Glasfarben an feinsten Farbabstufungen interessiert ist, kann hierfür eine erfindungsgemäß erhältliche Farbpalette herangezogen werden. Außer den Oxidnitriden als Farbpigment enthalten die Glasfarben niedrigschmelzende Glasfritten, etwa solche, welche bei einer Temperatur im Bereich zwischen 450 und 650 °C, insbesondere 450 und 600 °C, einbrennfähig sind.

Die nachfolgenden Beispiele zeigen das Verfahren zur Einstellung der Farbe, die Herstellung einiger besonders vorteilhafter erfindungsgemäßer Farbpigmente und deren coloristische Beurteilung mittels eines Spektralphotometers über die erhaltenen Transmissionsspektren und der daraus berechneten Farbwerte L∗, a∗ und b∗ im CIE-Lab-System (DIN 5033 Teil 3).

### Beispiel 1

Eine Mischung aus 0,0184 g La₂O₃, 0,1902 g CaCO₃, 0,4419 g Ta₂O₅ wird unter Zusatz von 0,5 g CaCl₂ und 0,5 g KCl durch 30-minütiges Mahlen in einer Kugelmühle homogenisiert. Anschließend wird die Mischung in einem Korundschiffchen in einem von außen beheizten Reaktionsrohr 40 Stunden bei 850 °C unter strömendem Ammoniak (10 l/h) geglüht, wobei die Umsetzung zu einem leuchtend gelben Oxidnitrid in der Perowskitstruktur der Formel Ca_{0,95}La_{0,05}TaO_{1,95}N_{1,05} erfolgt. Kurve "(x=0,05)" in Figur 3 zeigt das Transmissionsspektrum.

Meßparameter für die Transmissionsspektren in der Figur 1:

| | |
|---|---|
| Gerät | Cary 2400 UV-VIS-Spektralphotometer Fa. Varian, Darmstadt |
| Meßbereich | 400 bis 800 nm |
| Basislinien | korrigierte Messung |
| Einwaage | 60 mg Probe auf 4,5 g BaSO₄ |
| Ordinate | Transmission |
| Abszisse | Wellenlänge in nm |
| Scanrate | 1 mm sec⁻¹ |
| Meßinterval | 2 nm |

### Beispiel 2

Man verwendet ein Gemisch analog Beispiel 1 mit einem geänderten Verhältnis von La₂O₃ zu CaCO₃ (0,1841 zu 0,1001 g). Homogenisiert und setzt es analog der Mischung aus Beispiel 1 im Ammoniakstrom um. Man erhält ein oranges Oxidnitrid der Zusammensetzung: Ca_{0,5}La_{0,5}TaO_{1,5}N_{1,5}. Kurve "(x=0,5)" in Figur 3 zeigt das Transmissionsspektrum.

### Beispiel 3

Man verwendet ein Gemisch analog Beispiel 1 mit einem geänderten Verhältnis von La₂O₃ zu CaCO₃ (0,3314 zu 0,0200 g). Homogenisiert und setzt es analog der Mischung aus Beispiel 1 im Ammoniakstrom um. Man erhält ein rotes Oxidnitrid der Zusammensetzung Ca_{0,1}La_{0,9}TaO_{1,1}N_{1,9}. Kurve "(x=0,9)" in Figur 3 zeigt das Transmissionsspektrum.

Auf die gleiche Weise kann man alle Oxidnitride mit Perowskitstruktur der allgemeinen Formel Ca₁₋ₓLaₓTaO₂₋ₓN₁₊ₓ erhalten, die mit steigendem x von einem gelben zu einem roten Farbton wechseln.

Die folgende Tabelle zeigt die gemessenen Farbwerte L∗, a∗ und b∗ im CIE-Lab-System in Abhängigkeit von x und die Lage der Absorptionskante in nm:

| x | L∗ | a∗ | b∗ | Abs.-Kante |
|---|---|---|---|---|
| 0,05 | 98,28 | 0,93 | 19,59 | 478 |
| 0,1 | 97,66 | 2,24 | 20,93 | 490 |
| 0,3 | 96,08 | 5,35 | 14,54 | 524 |
| 0,5 | 94,80 | 9,34 | 17,76 | 538 |
| 0,7 | 93,92 | 8,89 | 8,92 | 563 |
| 0,9 | 92,34 | 7,00 | 2,72 | 604 |

Figur 1 zeigt die Abhängigkeit der Absorptionskante im System Ca₁₋ₓLaₓTaO₂₋ₓN₁₊ₓ von x. In Figur 1 sind sowohl die Meßwerte für die Absorptionskante als auch die ermittelte Regressionsgerade eingezeichnet.

### Beispiel 4

Eine Mischung aus 0,0866 g La(NO₃)₃, 0,2657 g SrCO₃, 0,449 Ta₂O₅ wird unter Zusatz von 0,5 g SrCl₂ und 0,5 g KCl durch 30-minütiges Mahlen in einer Kugelmühle homogenisiert. Anschließend wird die Mischung in einem Korundschiffchen in einem von außen beheizten Reaktionsrohr 40 Stunden bei 850 °C unter strömendem Ammoniak (10 l/h) geglüht, wobei die Umsetzung zu einem orangen Oxidnitrid der Formel Sr_{0,9}La_{0,1}TaO_{1,9}N_{1,1} erfolgt. Auf die gleiche Weise kann man alle Oxidnitride der allgemeinen Formel Sr₁₋ₓLaₓTaO₂₋ₓN₁₊ₓ (Perowskitstruktur) erhalten, die mit steigendem x von einem orangen zu einem roten Farbton wechseln.

### Beispiel 5

Eine pulverförmige Mischung aus CaCl₂ und Ta₂O₅ (Molverhältnis 4:1), bei dem CaCl₂ zugleich als umzusetzendes Metallchlorid und als Mineralisator dient, wird analog Beispiel 1 in einem Ofen im Ammoniakstrom 12 Stunden bei 850 °C geglüht. Erhalten wird ein grüngelbes Oxidnitrid.

### Beispiel 6

Eine Mischung aus 0,2882 g CaC₂O₄ und 0,4419 g Ta₂O₅ wird unter Zusatz von 0,5 g CaCl₂ und 2 g KCl durch 30-minütiges Mahlen in einer Kugelmühle homogenisiert. Anschließend wird die Mischung in einem Korundschiffchen in einem von außen beheizten Reaktionsrohr 12 Stunden bei 800 °C unter strömendem Ammoniak (10 l/h) geglüht, wobei die Umsetzung zu einem gelbgrünen Oxidnitrid erfolgt.

### Beispiel 7

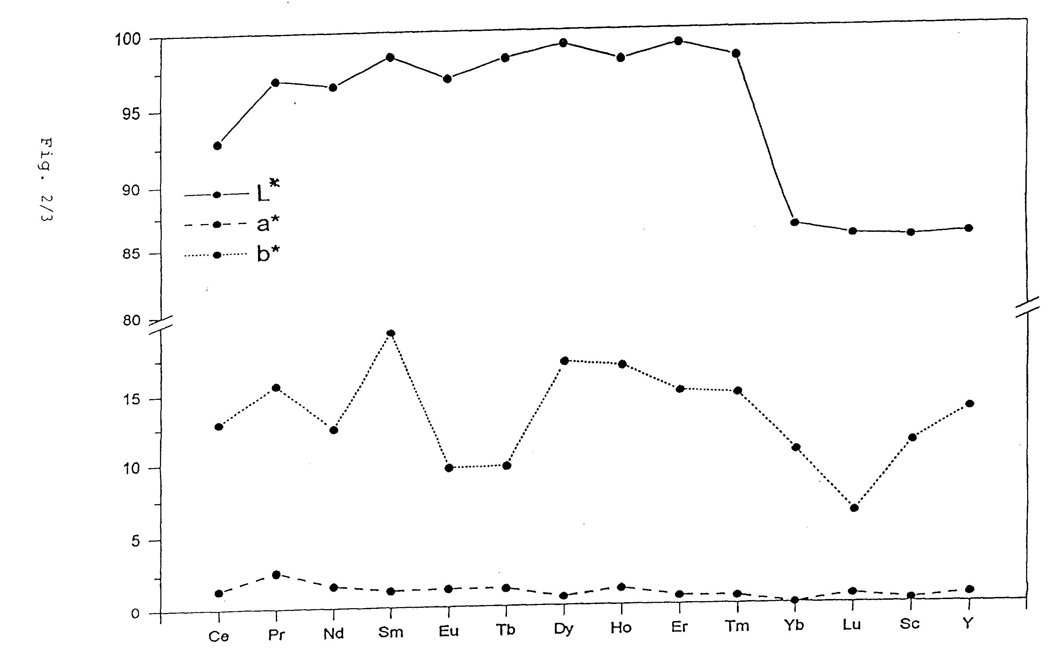

Analog Beispiel 3 wurden Verbindungen vom Typ Ca_{0,9}Ln_{0,1}Ta_{1,9}N_{1,1} hergestellt. Die in üblicher Weise ermittelten L∗a∗b∗-Werte in Abhängigkeit von dem eingesetzten Seltenerdmetall sind der Figur 2 zu entnehmen.

### Beispiel 8

### Oxidnitrid mit Pyrochlorstruktur:

Eine Mischung aus 0,667 g Sm(NO₃)₃ · 6 H₂O, 0,05 g CaCO₃ und 0,442 g Ta₂O₅ wird unter Zusatz von 1,5 g CaCl₂ durch 30-minütiges Mahlen in einer Kugelmühle homogenisiert. Anschließend wird die Mischung in einem Korundschiffchen in einem von außen beheizten Reaktionsrohr 10 Stunden bei 900 °C unter über KOH getrocknetem strömendem Ammoniak (4 l/h) geglüht, wobei die Umsetzung zu einem rosafarbenen, leicht braunstichigen Oxidnitrid der Formel Ca_{0,5}Sm_{1,5}Ta₂O_{5,5}N_{1,5} erfolgt. Überschüssiges CaCl₂ wird durch wiederholtes Auswaschen mit Wasser entfernt.

### Beispiel 9

### Oxidnitrid mit Spinellstruktur:

Eine Mischung aus 0,154 g Mg(NO₃)₂ · 6 H₂O, 0,075 g Ga₂O₃, 0,75 g Al(NO₃)₃ · 9 H₂O wird unter Zusatz von 1 g MgCl₂ durch 15-minütiges Mahlen in einer Kugelmühle homogenisiert. Anschließend wird die Mischung in einem Korundschiffchen in einem von außen beheizten Reaktionsofen 12 Stunden bei 1200 °C unter strömendem Ammoniak (12 l/h) geglüht, wobei die Umsetzung zu einem gelbgrauen Oxidnitrid der Formel Mg_{0,6}Ga_{0,4}Al₂O_{3,6}N_{0,4} erfolgt.

### Beispiel 10

### Oxidnitrid mit Elpasolitstruktur:

Eine Mischung aus 0,866 g La(NO₃)₃ · 6 H₂O, 0,0799 g TiO₂ und 0,221 g Ta₂O₅ wird unter Zusatz von 1 g NH₄Cl und 0,6 g NaCl durch 15-minütiges Mahlen in einer Kugelmühle homogenisiert. Anschließend wird die Mischung in einem Korundschiffchen in einem von außen beheizten Reaktionsrohr 48 Stunden bei 825 °C unter strömendem Ammoniak (10 l/h) geglüht, wobei die NH₄Cl/NaCl-Schmelze absublimiert und die Umsetzung zu einem rotbraunen Oxidnitrid der Formel La₂TiTaO₃N₃ erfolgt.

### Beispiel 11

Vier Oxonitride in der Perowskitstruktur der allgemeinen Formel Ca₁₋ₓLaₓTaO₂₋ₓN₁₊ₓ wurden im Vollton in PVC-Plastisol eingearbeitet und coloristisch geprüft. Für den Vollton wurden 1 g des jeweiligen Oxidnitrids und 3 g Plastisol vermischt und in einer Farbausreibemaschine dispergiert. Mit einem Schlitten wurden aus den Pasten Aufstriche in einer Dicke von 0,3 mm hergestellt. Die Gelierung erfolgte durch Erhitzen bei 140 °C innerhalb von 10 Minuten. Mit einem Spetralphotometer wurden die Farbwerte L*a*b* im CIE-Lab-System (DIN 5033, Teil III) gemessen. Die Farbwerte sowie der Wert x in der Strukturformel und die Farbe der Kunststoffeinfärbung folgen aus der Tabelle.

| Farbe | gelb | orange | orange-rot | rot |
|---|---|---|---|---|
| x | 0,4 | 0, 6 | 0, 65 | 0,95 |
| L* | 64,76 | 52,20 | 40,58 | 26,25 |
| a* | -6,29 | 19,8 | 30,13 | 35,71 |
| b* | 40,74 | 34,19 | 26,47 | 15,75 |

### Beispiel 12:

### Oxidnitrid mit Perowskitstruktur gemäß Formel (V):

Eine Mischung von 2 g La(NO₃)₃, 0,5102 g Ta₂O₅ und 0,185 g TiO₂ wird homogenisiert und an der Luft 12 h bei 1000 °C geglüht. Anschließend wird die Mischung unter Zusatz von 0,3 g LiCl in einem Korundschiffchen in einem von außen beheitzten Reaktionsrohr 40 h bei 900 °C unter strömendem Ammoniak (15 l/h) geglüht, wobei die LiCl-Schmelze absublimiert und die Umsetzung zu einem braunrotem Oxidnitrid der Formel La(Ti_{0,5}Ta_{0,5})O_{1,5}N_{1,5} erfolgt.

### Beispiel 13:

Oxidnitrid mit Perowskitstruktur gemäß Formel (V):

Eine Mischung aus 0,37 g La₂O₃, 0,22 g Ta₂O₅ und 0,21 g HfO₂ wird homogenisiert und an der Luft 48 h bei 1200 °C geglüht. Anschließend wird die Mischung unter Zusatz von 0,2 g LiCl und 0,2 g KCl in einem Korundschiffchen in einem von außen beheitzten Reaktionsrohr 24 h bei 900 °C unter strömendem Ammoniak (15 l/h) geglüht, wobei die LiCl/KCl-Schmelze absublimiert und die Umsetzung zu einem pastellbraunen Oxidnitrid der Formel La(Ti_{0,5}Hf_{0,5})O_{1,5}N_{1,5} erfolgt.

## Patentansprüche

1. Verfahren zur Herstellung von Oxidnitriden mit einer Farbe im Bereich von im wesentlichen gelb bis rot, wobei das Atomverhältnis Stickstoff zu Sauerstoff für die Farbe bestimmend ist, mit Pyrochlorstruktur und den allgemeinen Formeln
Aₓ A'₂₋ₓ B₂O₅₊ₓ N₂₋ₓ (Ia)
oder
A'₂ B_{2-y} B'_{y} O_{5+y} N_{2-y} (Ib),
worin A, A', B und B' für ein oder mehrere Kationen aus der Reihe
A: Mg²⁺, Ca²⁺, Sr²⁺, Ba²⁺ Zn²⁺;
A': Ln³⁺ (=Seltenerdelement), Bi³⁺, Al³⁺, Fe³⁺;
B: V⁵⁺, Nb⁵⁺, Ta⁵⁺, Mo⁵⁺, W⁵⁺;
B': Ti⁴⁺, Zr⁴⁺, Hf⁴⁺, Sn⁴⁺, Ge⁴⁺, Si⁴⁺, Nb⁴⁺, Ta⁴⁺ und
x und y für eine Zahl zwischen 0 und kleiner 2 stehen, ausgenommen Ln₂Ta₂O₅N₂,
oder mit Spinellstruktur und den allgemeinen Formeln
C D₂₋ₘ D'ₘ O₄₋ₘ Nₘ (IIa)
oder
C₁₋ₙ C'ₙ D₂ O₄₋ₙ Nₙ (IIb),
worin C, C', D und D' für ein oder mehrere Kationen aus der Reihe
C: Mg²⁺, Ca²⁺, Mn²⁺, Fe²⁺, Co²⁺, Ni²⁺, Zn²⁺;
D: Al³⁺, Ga³⁺, In³⁺, Ti³⁺, V³⁺, Cr³⁺, Fe³⁺, Co³⁺, Ni³⁺;
D': Ti⁴⁺, Zr⁴⁺, Hf⁴⁺, Sn⁴⁺, Ge⁴⁺, Si⁴⁺, Nb⁴⁺, Ta⁴⁺;
C': Al³⁺, Ga³⁺, In³⁺, Ti³⁺, V³⁺, Cr³⁺, Fe³⁺, Co³⁺, Ni³⁺ und
m eine Zahl zwischen größer 0 und 2 und
n eine Zahl zwischen größer 0 und 1 stehen,
oder mit Elpasolitstruktur und der allgemeinen Formel
A'₂ Q B O_{5-z} N_{1+z} ,
worin z für 0, 1 oder 2 steht und bei z gleich 0 Q ein zweiwertiges Metallion C, bei z gleich 1 Q ein dreiwertiges Metallion A" und bei z = 2 Q ein vierwertiges Metallion D" ist, entsprechend den Formeln
A'₂ C B O₅ N (IIIa),
A'₂ A''B O₄ N₂ (IIIb),
A'₂ D" B O₃ N₃ (IIIc),
worin A', B und C die vorerwähnte Bedeutung haben, A" für Ln³⁺ oder Bi³⁺ und D'' für ein vierwertiges Metallion steht, oder mit Perowskitstruktur und den allgemeinen Formeln
A₁₋ᵤA'ᵤ B O₂₋ᵤ N₁₊ᵤ IV)
oder
A'B_{1-w} B'_{w} O_{1+w} N_{2-w} (V),
worin A, A', B und B' für ein oder mehrere Kationen aus der Reihe
A: Mg²⁺, Ca²⁺, Sr²⁺, Ba²⁺;
A': Ln³⁺ (=Seltenerdmetall), Bi³⁺, Al³⁺, Fe³⁺
B: V⁵+, Nb⁵⁺, Ta⁵⁺;
B': Ti⁴⁺, Zr⁴⁺, Hf⁴⁺, Sn⁴⁺, Ge⁴⁺ und
u und w für eine Zahl zwischen 0 und 1 stehen,
ausgenommen Oxidnitride der allgemeinen Formel LnTaON2, wobei diese Perowskit-Farbpigmente eine erhöhte Farbbrillanz aufweisen, umfassend Glühen eines pulverförmigen Gemischs, enthaltend oxidnitridbildende Metallverbindungen mit den Kationen des Oxidnitrids im strukturformelgemäßen und damit die Kristallstruktur bestimmenden Atomverhältnis, unter nitridierenden Bedingungen,
dadurch gekennzeichnet,
daß das zu glühende Gemisch mindestens einen Mineralisator enthält und die Farbe des Oxidnitrids innerhalb einer Kristallstruktur über das Atomverhältnis N zu O eingestellt wird, wobei durch schrittweise Substitution eines ersten Kations im Gemisch der oxidnitridbildenden Metallverbindungen durch ein um eine Einheit höherwertiges zweites Kation das N/O-Verhältnis erhöht und damit die Absorptionskante langwellig verschoben oder durch schrittweise Substitution eines ersten Kations im Gemisch der oxidnitridbildenden Metallverbindungen durch ein um eine Einheit niederwertiges zweites Kation das N/O-Verhältnis erniedrigt und damit die Absorptionskante kurzwellig verschoben wird.

2. Verfahren nach Anspruch 1,
dadurch gekennzeichnet,
daß man in dem zu glühenden Gemisch die Kationen des herzustellenden Oxidnitrids in Form einer oder mehrerer Metallverbindungen aus der Reihe der Oxide, Mischoxide, Hydroxide, Oxidhydrate, Carbonate, Nitrate, Nitride, Oxidnitride und unter Glühbedingungen oxid- oder nitridbildenden Verbindungen aus der Reihe der Halogenide, Oxidhalogenide und Nitridhalogenide in einem der Kristallstruktur zuzuordnenden Mengenverhältnis und mindestens einen Mineralisator aus der Reihe der Alkali-, Erdalkali- oder Ammoniumhalogenide, Schwefel oder Schwefelverbindungen, Na₃AlF₆, Na₂SiF₆, AlF₃ oder Ammoniumsalze der Kohlensäure oder einer Mono- oder Dicarbonsäure mit 1 bis 4 C-Atomen in einer Menge von 0,1 bis 10 Gewichtsteilen pro Gewichtsteil des Gemischs der umzusetzenden Metallverbindungen einsetzt, das Gemisch in einer eine Quelle für Stickstoff, insbesondere Ammoniak, enthaltenden reduzierenden Atmosphäre bei einer Temperatur im Bereich von 700 bis 1250 °C bis zur abgeschlossenen Farbbildung glüht und, sofern erwünscht, Mineralisatoren aus dem geglühten Reaktionsgemisch herauslöst.

3. Verfahren nach Anspruch 1 oder 2,
dadurch gekennzeichnet,
daß man mindestens eine der oxidnitridbildenden Metallverbindungen in Form eines Halogenids, Oxidhalogenids oder Nitridhalogenids und mindestens eine der umzusetzenden Metallverbindungen in Form einer ein oder mehrere Sauerstoffatome enthaltenden Metallverbindung einsetzt.

4. Verfahren nach einem oder mehreren der Ansprüche 1 bis 3,
dadurch gekennzeichnet,
daß man als Mineralisator ein oder mehrere Alkali- oder Erdalkalihalogenide, insbesondere Fluoride und/oder Chloride von Li, Na, Ka, Mg, Ca und Sr einsetzt.

5. Verfahren nach einem oder mehreren der Ansprüche 1 bis 4,
dadurch gekennzeichnet,
daß man pro Gewichtsteil des Gemischs oxidnitridbildender Metallverbindungen 0,5 bis 5 Gewichtsteile eines oder mehrerer Mineralisatoren im zu glühenden Gemisch einsetzt.

6. Verfahren nach einem oder mehreren der Ansprüche 1 bis 5,
dadurch gekennzeichnet,
daß man das Pulvergemisch bei 800 bis 900 °C glüht.

7. Verfahren nach einem oder mehreren der Ansprüche 1 bis 6,
dadurch gekennzeichnet,
daß man das Pulvergemisch in einer Atmosphäre aus im wesentlichen 10 bis 100 Volumanteilen Ammoniak und 0 bis 90 Volumanteilen Stickstoff, insbesondere in einer im wesentlichen aus Ammoniak bestehenden Atmosphäre, welche bis zu 10 Mol-%, bezogen auf Ammoniak, Stickstoff und/oder Methan enthalten kann, glüht.

8. Farbpigmente auf der Basis von Oxidnitriden, deren Atomverhältnis Stickstoff zu Sauerstoff für die Farbe bestimmend ist, erhältlich nach dem Verfahren gemäß den Ansprüchen 1 bis 7 und gekennzeichnet durch in der Pyrochlorstruktur kristallisierte Oxidnitride der allgemeinen Formeln
Aₓ A'₂₋ₓ B₂O₅₊ₓ N₂₋ₓ (Ia)
oder
A'₂ B_{2-y} B'_{y} O_{5+y} N_{2-y} (Ib),
worin A, A', B und B' für ein oder mehrere Kationen aus der Reihe
A: Mg²⁺, Ca²⁺, Sr²⁺, Ba²⁺ Zn²⁺;
A': Ln³⁺ (=Seltenerdelement), Bi³⁺, Al³⁺, Fe³⁺;
B: V⁵⁺, Nb⁵⁺, Ta⁵⁺, Mo⁵⁺, W⁵⁺;
B': Ti⁴⁺, Zr⁴⁺, Hf⁴⁺, Sn⁴⁺, Ge⁴⁺, Si⁴⁺, Nb⁴⁺, Ta⁴⁺ und
x und y für eine Zahl zwischen 0 und kleiner 2 stehen, ausgenommen Ln₂Ta₂O₅N₂,
oder in der Spinellstruktur kristallisierte Oxidnitride der allgemeinen Formeln
C D₂₋ₘ D'ₘ O₄₋ₘ Nₘ (IIa)
oder
C₁₋ₙ C'ₙ D₂ O₄₋ₙ Nₙ (IIb),
worin C, C', D und D' für ein oder mehrere Kationen aus der Reihe
C: Mg²⁺, Ca²⁺, Mn²⁺, Fe²⁺, Co²⁺, Ni²⁺, Zn²⁺;
D: Al³⁺, Ga³⁺, In³⁺, Ti³⁺, V³⁺, Cr³⁺, Fe³⁺, Co³⁺, Ni³⁺;
D': Ti⁴⁺, Zr⁴⁺, Hf⁴⁺, Sn⁴⁺, Ge⁴⁺, Si⁴⁺, Nb⁴⁺, Ta⁴⁺;
C': Al³⁺, Ga³⁺, In³⁺, Ti³⁺, V³⁺, Cr³⁺, Fe³⁺, Co³⁺, Ni³⁺ und
m eine Zahl zwischen größer 0 und 2 und
n eine Zahl zwischen größer 0 und 1 stehen,
oder in der Elpasolitstruktur kristallisierte Oxidnitride der allgemeinen Formel
A'₂ Q B O_{5-z} N_{1+z} ,
worin z für 0, 1 oder 2 steht und bei z gleich 0 Q ein zweiwertiges Metallion C, bei z gleich 1 Q ein dreiwertiges Metallion A" und bei z = 2 Q ein vierwertiges Metallion D'' ist, entsprechend den Formeln
A'₂ C B O₅ N (IIIa),
A'₂ A"B O₄ N₂ (IIIb),
A'₂ D" B O₃ N₃ (IIIc),
worin A', B und C die vorerwähnte Bedeutung haben, A" für Ln³⁺ oder Bi³⁺ und D'' für ein vierwertiges Metallion steht.

9. Farbpigmente auf der Basis von in der Perowskitstruktur vorliegenden Oxidnitriden, worin mit zunehmendem Atomverhältnis Stickstoff zu Sauerstoff die Absorptionskante langwellig verschoben ist, der allgemeinen Formel
A₁₋ᵤA'ᵤ B O₂₋ᵤ N₁₊ᵤ (IV)
oder
A'B_{1-w} B'_{w} O_{1+w} N_{2-w} (V),
worin A, A', B und B' für ein oder mehrere Kationen aus der Reihe
A: Mg²⁺, Ca²⁺, Sr²⁺, Ba²⁺;
A': Ln³⁺ (=Seltenerdmetall), Bi³⁺, Al³⁺, Fe³⁺
B: V⁵⁺, Nb⁵⁺, Ta⁵⁺;
B': Ti⁴⁺, Zr⁴⁺, Hf⁴⁺, Sn⁴⁺, Ge⁴⁺ und
u und w für eine Zahl zwischen 0 und 1 stehen,
ausgenommen Oxidnitride der allgemeinen Formel LnTaON₂ mit erhöhter Farbbrillanz und L*a*b*-Farbwerten, wie sie erhältlich sind durch ein Verfahren, umfassend Glühen eines pulverförmigen Gemischs aus (i) oxidnitridbildenden Metallverbindungen aus der Reihe der Oxide, Mischoxide, Hydroxide, Oxidhydrate, Carbonate, Nitrate, Nitride, Oxidnitride und unter Glühbedingungen oxid- oder nitridbildenden Verbindungen aus der Reihe der Halogenide, Oxidhalogenide und Nitridhalogenide, wobei die Kationen des herzustellenden Oxidnitrids im Atomverhältnis gemäß Formel IV oder V anwesend sind, und (ii) mindestens einem Mineralisator aus der Reihe der Alkali-, Erdalkali- oder Ammoniumhalogenide, Schwefel oder Schwefelverbindungen, Na₃AlF₆, Na₂SiF₆, AlF₃ oder Ammoniumsalze der Kohlensäure oder einer Mono- oder Dicarbonsäure mit 1 bis 4 C-Atomen in einer Menge von 0,1 bis 10 Gewichtsteilen pro Gewichtsteil des Gemischs der umzusetzenden Metallverbindungen bei 700 bis 1250 °C in einer eine Quelle für Stickstoff, insbesondere Ammoniak, enthaltenden reduzierenden Atmosphäre bis zur abgeschlossenen Farbbildung und, sofern erwünscht, Herauslösen der Mineralisatoren aus dem geglühten Gemisch.

10. Farbpigmente nach Anspruch 9,
gekennzeichnet durch Formel (IV), worin A für Ca²⁺, Sr²⁺ oder Ba²⁺, A' für Ln³⁺, B für Ta⁵⁺ und u für eine Zahl zwischen 0 und kleiner 1 stehen.

11. Verwendung der Farbpigmente gemäß den Ansprüchen 8 bis 10 zur Herstellung von einbrennfähigen Glasfarben und zum Einfärben von bei unterhalb 700 °C einbrennfähigen Glasuren sowie zum Einfärben von Kunststoffen, Lacken und kosmetischen Artikeln.

## Claims

1. Process for the production of oxidenitrides having a colour in the range from substantially yellow to red, wherein the atomic ratio of nitrogen to oxygen determines colour, with a pyrochlore structure and the general formulae
AₓA'₂₋ₓ B₂O₅₊ₓ N₂₋ₓ (Ia)
or
A'₂ B_{2-y} B'_{y} O_{5+y} N_{2-y} (Ib)
in which A, A', B and B' denote one or more cations from the series
A: Mg²⁺, Ca²⁺, Sr²⁺, Ba²⁺, Zn²⁺;
A' : Ln³⁺ (= rare earth element) , Bi³⁺, Al³⁺, Fe³⁺;
B: V⁵⁺, Nb⁵⁺, Ta⁵⁺ , Mo⁵⁺ , W⁵⁺ ;
B': Ti⁴⁺, Zr⁴⁺, Hf⁴⁺, Sn⁴⁺, Ge⁴⁺, Si⁴⁺, Nb⁴⁺, Ta⁴⁺ and
x and y denote a number between 0 and less than 2, with the exception of Ln₂Ta₂O₅N₂,
or with a spinel structure and the general formulae
C D₂₋ₘ D'ₘ O₄₋ₘ Nₘ (IIa)
or
C₁₋ₙ C'ₙ D₂ O₄₋ₙ Nₙ (IIb),
in which C, C', D and D' denote one or more cations from the series
C: Mg²⁺, Ca²⁺, Mn²⁺, Fe²⁺, Co²⁺, Ni²⁺, Zn²⁺;
D: Al³⁺, Ga³⁺, In³⁺, Ti³⁺, V³⁺, Cr³⁺, Fe³⁺, Co³⁺, Ni³⁺;
D': Ti⁴⁺, Zr⁴⁺, Hf⁴⁺, Sn⁴⁺, Ge⁴⁺, Si⁴⁺, Nb⁴⁺, Ta⁴⁺;
C' : Al³⁺, Ga³⁺, In³⁺, Ti³⁺, V³⁺, Cr³⁺, Fe³⁺, Co³⁺, Ni³⁺ and
m denotes a number between greater than 0 and 2 and
n denotes a number between greater than 0 and 1,
or with an elpasolite structure and the general formula
A'₂ Q B O_{5-z} N_{1+z}
in which z denotes 0, 1 or 2 and, when z equals 0, Q is a divalent metal ion C, when z equals 1, Q is a trivalent metal ion A" and when z equals 2, Q is a tetravalent metal ion D", in accordance with the formulae
A'₂ C B O₅ N (IIIa),
A'₂ A" B O₄ N₂ (IIIb),
A'₂ D" B O₃ N₃ (IIIc),
in which A', B and C have the above-stated meaning, A" denotes Ln³⁺ or Bi³⁺ and D" denotes a tetravalent metal ion, or with a perovskite structure and the general formulae
A₁₋ᵤA'ᵤ B O₂₋ᵤ N₁₊ᵤ (IV)
or
A'B_{1-w} B'_{w} O_{1+w} N_{2-w} (V),
in which A, A', B and B' denote one or more cations from the series
A: Mg²⁺, Ca²⁺, Sr²⁺, Ba²⁺;
A' : Ln³⁺ (= rare earth metal), Bi³⁺, Al³⁺, Fe³⁺
B: V⁵⁺, Nb⁵⁺, Ta⁵⁺;
B' : Ti⁴⁺, Zr⁴⁺, Hf⁴⁺, Sn⁴⁺, Ge⁴⁺ and
u and w denote a number between 0 and 1,
with the exception of oxidenitrides of the general formula LnTaON₂, wherein these perovskite coloured pigments exhibit elevated colour brightness, comprising calcination of a pulverulent mixture containing oxidenitride-forming metal compounds with the cations of the oxidenitride in the atomic ratio according to the structural formulae which consequently determines the crystal structure, under nitriding conditions,
characterised in that
the mixture to be calcined contains at least one mineraliser and the colour of the oxidenitride within one crystal structure is adjusted by means of the N to O atomic ratio, wherein the N:O ratio is increased by stepwise replacement of a first cation in the mixture of oxidenitride-forming metal compounds with a second cation one unit more highly valent, so shifting the absorption edge towards a longer wavelength, or the N:O ratio is reduced by stepwise replacement of a first cation in the mixture of oxidenitride-forming metal compounds with a second cation one unit less valent, so shifting the absorption edge towards a shorter wavelength.

2. Process according to claim 1,
characterised in that,
in the mixture to be calcined, the cations of the oxidenitride to be produced, assuming the form of one or more metal compounds from the series of oxides, mixed oxides, hydroxides, oxide hydrates, carbonates, nitrates, nitrides, oxidenitrides and compounds which form oxides or nitrides under calcining conditions from the series of halides, oxidehalides and nitridehalides are used in a quantity ratio to be correlated with the crystal structure and at least one mineraliser from the series of alkali metal, alkaline earth metal or ammonium halides, sulfur or sulfur compounds, Na₃AlF₆, Na₂SiF₆, AlF₃ or ammonium salts of carbonic acid or of a mono- or dicarboxylic acid having 1 to 4 C atoms is used in a quantity of 0.1 to 10 parts by weight per part by weight of the mixture of the metal compounds to be reacted, the mixture is calcined in a reducing atmosphere containing a source of nitrogen, in particular ammonia, at a temperature in the range from 700 to 1250 °C until colour formation is complete and, if desired, mineralisers are leached out of the calcined reaction mixture.

3. Process according to claim 1 or 2,
characterised in that
at least one of the oxidenitride-forming metal compounds is used in the form of a halide, oxidehalide or nitridehalide and at least one of the metal compounds to be reacted is used in the form of a metal compound containing one or more oxygen atoms.

4. Process according to one or more of claims 1 to 3,
characterised in that
one or more alkali metal or alkaline earth metal halides is/are used as mineraliser, in particular fluorides and/or chlorides of Li, Na, Ka, Mg, Ca and Sr.

5. Process according to one or more of claims 1 to 4,
characterised in that,
per part by weight of the mixture of oxidenitride-forming metal compounds, 0.5 to 5 parts by weight of one or more mineralisers are used in the mixture to be calcined.

6. Process according to one or more of claims 1 to 5,
characterised in that
the powder mixture is calcined at 800 to 900 °C.

7. Process according to one or more of claims 1 to 6,
characterised in that
the powder mixture is calcined in an atmosphere substantially comprising 10 to 100 parts by volume of ammonia and 0 to 90 parts by volume of nitrogen, in particular in an atmosphere substantially consisting of ammonia, which may contain up to 10 mol%, relative to ammonia, of nitrogen and/or methane.

8. Coloured pigments based on oxidenitrides, the atomic ratio of nitrogen to oxygen of which determines colour, obtainable using the process according to claims 1 to 7 and characterised by oxidenitrides crystallised in the pyrochlore structure of the general formulae
AₓA'₂₋ₓ B₂O₅₊ₓ N₂₋ₓ (Ia)
or
A'₂ B_{2-y} B'_{y} O_{5+y} N_{2-y} (Ib)
in which A, A', B and B' denote one or more cations from the series
A: Mg²⁺, Ca²⁺, Sr²⁺, Ba²⁺, Zn²⁺;
A' : Ln³⁺ (= rare earth element), Bi³⁺, Al³⁺, Fe³⁺;
B: V⁵⁺, Nb⁵⁺, Ta⁵⁺, Mo⁵⁺, W⁵⁺;
B': Ti⁴⁺, Zr⁴⁺, Hf⁴⁺, Sn⁴⁺, Ge⁴⁺, Si⁴⁺, Nb⁴⁺, Ta⁴⁺ and
x and y denote a number between 0 and less than 2, with the exception of Ln₂Ta₂O₅N₂,
or oxidenitrides crystallised in the spinel structure of the general formulae
C D₂₋ₘ D'ₘ O₄₋ₘ Nₘ (IIa)
or
C₁₋ₙ C'ₙ D₂ O₄₋ₙ Nₙ (IIb),
in which C, C', D and D' denote one or more cations from the series
C: Mg²⁺, Ca²⁺, Mn²⁺, Fe²⁺, Co²⁺, Ni²⁺, Zn²⁺ ;
D: Al³⁺, Ga³⁺, In³⁺, Ti³⁺, V³⁺, Cr³⁺, Fe³⁺, Co³⁺, Ni³⁺;
D': Ti⁴⁺, Zr⁴⁺, Hf⁴⁺, Sn⁴⁺, Ge⁴⁺, Si⁴⁺, Nb⁴⁺, Ta⁴⁺;
C' : Al³⁺, Ga³⁺, In³⁺, Ti³⁺, V³⁺, Cr³⁺, Fe³⁺, Co³⁺, Ni³⁺ and
m denotes a number between greater than 0 and 2 and
n denotes a number between greater than 0 and 1,
or oxidenitrides crystallised in the elpasolite structure of the general formula
A'₂ Q B O_{5-z} N_{1+z}
in which z denotes 0, 1 or 2 and, when z equals 0, Q is a divalent metal ion C, when z equals 1, Q is a trivalent metal ion A" and when z equals 2, Q is a tetravalent metal ion D", in accordance with the formulae
A'₂ C B O₅ N (IIIa),
A'₂ A" B O₄ N₂ (IIIb),
A'₂ D" B O₃ N₃ (IIIc),
in which A', B and C have the above-stated meaning, A" denotes Ln³⁺ or Bi³⁺ and D" denotes a tetravalent metal ion.

9. Coloured pigments based on oxidenitrides present in a perovskite structure, in which the absorption edge is shifted towards a longer wavelength as the nitrogen to oxygen atomic ratio increases, of the general formulae
A₁₋ᵤA'ᵤ B O₂₋ᵤ N₁₊ᵤ (IV)
or
A'B_{1-w} B'_{w} O_{1+w} N_{2-w} (V),
in which A, A', B and B' denote one or more cations from the series
A: Mg²⁺, Ca²⁺, Sr²⁺, Ba²⁺;
A' : Ln³⁺ (= rare earth metal) , Bi³⁺, Al³⁺, Fe³⁺
B: V⁵⁺, Nb⁵⁺, Ta⁵⁺;
B': Ti⁴⁺, Zr⁴⁺, Hf⁴⁺, Sn⁴⁺, Ge⁴⁺ and
u and w denote a number between 0 and 1,
with the exception of oxidenitrides of the general formula LnTaON₂ having elevated colour brightness and L*a*b* colour values, as are obtainable by a process comprising calcination of a pulverulent mixture of (i) oxidenitride-forming metal compounds from the range of oxides, mixed oxides, hydroxides, oxide hydrates, carbonates, nitrates, nitrides, oxidenitrides and compounds which form oxides or nitrides under calcining conditions from the series of halides, oxidehalides and nitridehalides, wherein the cations of the oxidenitride to be produced are present in the atomic ratio according to formula IV or V, and (ii) at least one mineraliser from the series of alkali metal, alkaline earth metal or ammonium halides, sulfur or sulfur compounds, Na₃AlF₆, Na₂SiF₆, AlF₃ or ammonium salts of carbonic acid or of a mono- or dicarboxylic acid having 1 to 4 C atoms in a quantity of 0.1 to 10 parts by weight per part by weight of the mixture of the metal compounds to be reacted at 700 to 1250 °C in a reducing atmosphere containing a source of nitrogen, in particular ammonia until colour formation is complete and, if desired, leaching of the mineralisers out of the calcined mixture.

10. Coloured pigment according to claim 9,
characterised by the formula (IV), in which A denotes Ca²⁺, Sr²⁺ or Ba²⁺, A' denotes Ln³⁺, B denotes Ta⁵⁺ and u denotes a number between 0 and less than 1.

11. Use of the coloured pigments according to claims 8 to 10 for the production of stovable glass colorants and for colouring glazes stovable at below 700 °C and for colouring plastics, paints and cosmetics.

## Revendications

1. Procédé de production d'oxynitrures ayant une couleur comprise dans un intervalle allant essentiellement du jaune au rouge, le rapport atomique de l'azote à l'oxygène pour la couleur étant déterminant, à structure de pyrochlore et de formules générales :
AₓA'₂₋ₓB₂O₅₊ₓ N₂₋ₓ (Ia)
ou
A'₂ B_{2-y} B'_{y} O_{5+y} N_{2-y} (Ib),
dans lesquelles A, A', B et B' représentent un ou plusieurs cations de la série
A : Mg²⁺, Ca²⁺, Sr²⁺, Ba²⁺ Zn²⁺ ;
A' : Ln³⁺ (= terre rare), Bi³⁺, Al³⁺, Fe³⁺ ;
B : V⁵⁺, Nb⁵⁺, Ta⁵⁺, Mo⁵⁺, W⁵⁺ ;
B' : Ti⁴⁺, Zr⁴⁺, Hf⁴⁺, Sn⁴⁺, Ge⁴⁺, Si⁴⁺, Nb⁴⁺, Ta⁴⁺ et
x et y représentent un nombre entre 0 et inférieur à 2, à l'exception de Ln₂Ta₂O₅N₂,
ou à structure de spinelle et de formules générales :
C D₂₋ₘ D'ₘ O₄₋ₘ Nₘ (IIa)
ou
C₁₋ₙ C'n D₂ O₄₋ₙ Nₙ (IIb),
dans lesquelles C, C', D et D' représentent un ou plusieurs cations de la série :
C : Mg²⁺, Ca²⁺, Mn²⁺, Fe²⁺, Co²⁺, Ni²⁺, Zn²⁺ ;
D : Al³⁺, Ga³⁺, In³⁺, Ti³⁺, V³⁺, Cr³⁺, Fe³⁺, Co³⁺, Ni³⁺ ;
D' : Ti⁴⁺, Zr⁴⁺, Hf⁴⁺, Sn⁴⁺, Ge⁴⁺, Si⁴⁺, Nb⁴⁺, Ta⁴⁺ ;
C' : Al³⁺, Ga³⁺, In³⁺, Ti³⁺, V³⁺, Cr³⁺, Fe³⁺, Co³⁺, Ni³⁺ et
m est un nombre compris entre > 0 et 2 et
n est un nombre compris entre > 0 et 1,
ou à structure d'elpasolite et de formule générale
A'₂ Q B O_{5-z} N_{1+z}
dans laquelle z vaut 0, 1 ou 2 et lorsque z est égal à 0, Q est un ion métallique bivalent C, lorsque z est égal à 1 Q est un ion métallique trivalent A" et lorsque z = 2, Q est un ion métallique tétravalent D", correspondant aux formules
A'₂ C B O₅ N (IIIa),
A'₂ A"B O₄ N₂ (IIIb),
A'₂ D"B O₃ N₃ (IIIc),
dans lesquelles A', B et C ont les significations indiquées ci-dessus, A" représente Ln³⁺ ou Bi³⁺ et D" représente un ion métallique tétravalent, ou à structure de perowskite et de formules générales :
A₁₋ᵤ A'ᵤ B O₂₋ᵤ N₁₊ᵤ (IV)
ou
A'B_{1-w}B'_{w}O_{1+w}N_{2-w} (V),
dans lesquelles A, A', B et B' représentent un ou plusieurs cations de la série :
A : Mg²⁺, Ca²⁺, Sr²⁺, Ba²⁺ ;
A' : Ln³⁺ (= métal rare), Bi³⁺, Al³⁺, Fe³⁺ ;
B : V⁵⁺, Nb⁵⁺, Ta⁵⁺ ;
B' : Ti⁴⁺, Zr⁴⁺, Hf⁴⁺, Sn⁴⁺, Ge⁴⁺ ; et
u et w représentent un nombre compris entre 0 et 1, à l'exception des oxynitrures de formule générale de Ln₂TaON₂, où ces pigments colorés de perowskite présentent un éclat de couleur accru, comprenant la calcination d'un mélange pulvérulent contenant des composés métalliques formant des oxynitrures avec les cations de l'oxynitrure dans un rapport atomique conforme à la formule structure et déterminant ainsi la structure cristalline dans des conditions nitrurantes,
caractérisé en ce que
- le mélange à calciner contient au moins un minéralisateur et
- la couleur de l'oxynitrure à l'intérieur d'une structure cristalline est réglée par l'intermédiaire du rapport atomique de N à O, dans lequel par une substitution par étapes d'un premier cation dans le mélange des composés métalliques formant l'oxynitrure, par un second cation de valence plus élevée d'une unité, le rapport N/O est augmenté et ainsi la constante d'absorption est déplacée vers les plus grandes longueurs d'onde, ou par une substitution par étapes d'un premier cation, dans le mélange des composés métalliques formant l'oxynitrure, par un second cation de valence plus faible d'une unité, le rapport N/O est abaissé et ainsi la constante d'absorption est déplacée vers les courtes longueurs d'onde.

2. Procédé selon la revendication 1,
caractérisé en ce que
dans le mélange à calciner, on utilise les cations de l'oxynitrure à produire sous la forme d'un ou plusieurs composés métalliques de la série des oxydes, des oxydes mixtes, hydroxydes, oxydes hydratés, carbonates, nitrates, nitrures, oxynitrures et des composés formant, dans les conditions de calcination, des oxynitrures ou des nitrures, de la série des halogénures, oxyhalogénures et nitrohalogénures dans un rapport quantitatif se coordonnant à la structure cristalline, et au moins un minéralisateur de la série des halogénures des métaux alcalins, de métaux alcalino-terreux ou d'ammonium, du soufre ou des composés soufrés, Na₃AlF₆, Na₂SiF₆, AlF₃, ou des sels d'ammonium de l'acide carbonique ou d'un acide mono- ou dicarboxylique ayant de 1 à 4 atomes de carbone en une quantité de 0,1 à 10 parties en poids par partie en poids du mélange des composés métalliques à faire réagir, en ce qu'on calcine le mélange dans une atmosphère réductrice contenant une source d'azote, en particulier de l'ammoniac, à une température comprise entre 700 et 1250°C jusqu'à la fin de la formation de la couleur et, si on le désire, en ce qu'on extrait les minéralisateurs du mélange réactionnel calciné.

3. Procédé selon la revendication 1 ou ,
caractérisé en ce qu'
on utilise au moins un des composés métalliques formateur d'oxynitrure sous la forme d'un halogénure, d'un oxyhalogénure ou d'un nitrohalogénure et au moins un des composés métalliques à faire réagir sous la forme d'un composé métallique contenant un ou plusieurs atomes d'oxygène.

4. Procédé selon une ou plusieurs des revendications 1 à 3,
caractérisé en ce qu'
on utilise comme minéralisateur un ou plusieurs halogénures de métaux alcalins ou alcalino-terreux, en particulier fluorures et/ou chlorures de Li, Na, K, Mg, Ca et Sr.

5. Procédé selon une ou plusieurs des revendications 1 à 4,
caractérisé en ce qu'
on utilise dans le mélange à calciner, par partie en poids du mélange de composés métalliques formateurs d'oxynitrures, de 0,5 à 5 parties en poids d'un ou plusieurs minéralisateurs.

6. Procédé selon une ou plusieurs des revendications 1 à 5,
caractérisé en ce qu'
on calcine le mélange pulvérulent entre 800 et 900°C.

7. Procédé selon une ou plusieurs des revendications 1 à 6,
caractérisé en ce qu'
on calcine le mélange pulvérulent dans une atmosphère constituée pour l'essentiel de 10 à 100 parties en volume d'ammoniac et de 0 à 90 parties en volume d'azote, en particulier dans une atmosphère constituée pour l'essentiel d'ammoniac, qui peut contenir jusqu'à 10 % molaire, par rapport à l'ammoniac d'azote et/ou de méthane.

8. Pigments colorés à base d'oxynitrures, dont le rapport atomique de l'azote à l'oxygène est déterminant pour la couleur, que l'on peut obtenir selon le procédé conforme aux revendications 1 à 7,
caractérisés par
des oxynitrures cristallisant dans la structure pyrochlore, de formules générales :
AₓA'₂₋ₓB₂O₅₊ₓ N₂₋ₓ (Ia)
ou
A'₂ B_{2-y} B'_{y} O_{5+y} N_{2-y} (Ib),
dans lesquelles A, A', B et B' représentent un ou plusieurs cations de la série :
A : Mg²⁺, Ca²⁺, Sr²⁺, Ba²⁺, Zn²⁺ ;
A' : Ln³⁺ (= terre rare), Bi³⁺, Al³⁺, Fe³⁺ ;
B : V⁵⁺, Nb⁵⁺, Ta⁵⁺, Mo⁵⁺, W⁵⁺ ;
B' : Ti⁴⁺, Zr⁴⁺, Hf⁴⁺, Sn⁴⁺, Ge⁴⁺, Si⁴⁺, Nb⁴⁺, Ta⁴⁺ et
x et y représentent un nombre entre 0 et inférieur à 2, à l'exception de Ln₂Ta₂O₅N₂,
ou des oxynitrures, cristallisant dans la structure de spinelle et de formules générales :
C D₂₋ₘ D'm O₄₋ₘ Nm (IIa)
ou
C₁₋ₙ C'ₙ D₂ O₄₋ₙ Nₙ (IIb),
dans lesquelles C, C', D et D' représentent un ou plusieurs cations de la série :
C : Mg²⁺, Ca²⁺, Mn²⁺, Fe²⁺, Co²⁺, Ni²⁺, Zn²⁺ ;
D : Al³⁺, Ga³⁺, In³⁺, Ti³⁺, V³⁺, Cr³⁺, Fe³⁺, Co³⁺, Ni³⁺ ;
D' : Ti⁴⁺, Zr⁴⁺, Hf⁴⁺, Sn⁴⁺, Ge⁴⁺, Si⁴⁺, Nb⁴⁺, Ta⁴⁺ ;
C' : Al³⁺, Ga³⁺, In³⁺, Ti³⁺, V³⁺, Cr³⁺, Fe³⁺, Co³⁺, Ni³⁺ et
m est un nombre compris entre 0 et 2 et
n est un nombre compris entre > 0 et 1,
ou d'oxynitrures, cristallisant dans la structure elpasolite, de formule générale :
A'₂ Q B O_{5-z} N_{1+z}
dans laquelle z vaut 0, 1 ou 2 et lorsque z est égal à 0, Q est un ion métallique bivalent C, lorsque z est égal 0 à 1 Q est un ion métallique trivalent A" et lorsque z = 2, Q est un ion métallique tétravalent D", correspondant aux formules :
A'₂ C B O₅ N (IIIa),
A'₂ A"B O₄ N₂ (IIIb),
A'₂ D"B O₃ N₃ (IIIc),
dans lesquelles A', B et C ont les significations indiquées ci-dessus, A" représente Ln³⁺ ou Bi³⁺ et D" représente un ion métallique tétravalent.

9. Pigments colorés à base d'oxynitrures présents dans la structure perowskite, où, lorsque le rapport atomique de l'azote à l'oxygène croît, la constante d'absorption est déplacée vers les grandes longueurs d'onde, de formules générales
A₁₋ᵤ A'ᵤ B O₂₋ᵤ N₁₊ᵤ (IV)
ou
A'B_{1-w}B'_{w}O_{1+w}N_{2-w} (V),
dans lesquelles A, A', B et B' représentent un ou plusieurs cations de la série :
A : Mg²⁺, Ca²⁺, Sr²⁺, Ba²⁺ ;
A' : Ln³⁺ (= métal rare), Bi³⁺, Al³⁺, Fe³⁺ ;
B : V⁵⁺, Nb⁵⁺, Ta⁵⁺ ;
B' : Ti⁴⁺, Zr⁴⁺, Hf⁴⁺, Sn⁴⁺, Ge⁴⁺ et
u et w représentent un nombre compris entre 0 et 1, à l'exception des oxynitrures de formule générale LnTaON₂ à éclat de couleur accru et avec des valeurs de couleur L*a*b*, telles qu'on peut en obtenir par un procédé comprenant la calcination d'un mélange pulvérulent constitué de (i) des composés métalliques formateurs d'oxynitrure de la série des oxydes, oxydes mixtes, hydroxydes, oxydes hydratés, carbonates, nitrates, nitrures, oxynitrures et composés formateurs d'oxynitrures et de nitrures dans les conditions de calcination, de la série des halogénures, oxyhalogénures et nitrohalogénures, dans lesquels les cations de l'oxynitrure à produire sont présents dans le rapport atomique selon la formule (IV) ou (V), et (ii) au moins un minéralisateur de la série des halogénures de métaux alcalins, de métaux alcalino-terreux ou d'ammonium, du soufre ou des composés soufrés, de Na₃AlF₆, Na₂SiF₆, AlF₃ ou des sels d'ammonium de l'acide carbonique ou d'un acide mono- ou dicarboxylique ayant de 1 à 4 atomes de carbone en une quantité de 0,1 à 10 parties en poids par partie en poids du mélange des composés métalliques à faire réagir entre 700 et 1250°C dans une atmosphère réductrice contenant une source d'azote, en particulier de l'ammoniac, jusqu'à la fin de la formation de la couleur et, si on le désire, élimination des minéralisateurs à partir du mélange calciné.

10. Pigments colorés selon la revendication 9,
caractérisés par
la formule (IV), dans laquelle A représente Ca²⁺, Sr²⁺ ou Ba²⁺, A' représente Ln³⁺, B représente Ta⁵⁺ et u représente un nombre compris entre 0 et < 1.

11. Utilisation des pigments colorés selon les revendications 8 à 10 pour la production de couleurs pour verre au four et pour la coloration d'émaux allant au four en dessous de 700°c, ainsi que pour la coloration de matières plastiques, de vernis et d'articles cosmétiques.
